# EUROPEAN PATENT APPLICATION

(11) **EP 3 604 040 A1**
(43) Date of publication of application: **05.02.2020**
(21) Application number: 18778242.0
(22) Date of filing: 16.03.2018
(51) Int. Cl.: B60R 11/02, B60K 35/00, G02B 27/01

(54) **VEHICULAR DISPLAY DEVICE**

(30) Priority: 28.03.2017 JP 2017062058
(71) Applicant: Nippon Seiki Co., Ltd., Nagaoka-shi, Niigata 940-8580 (JP)
(72) Inventor: MASUYA Yuki, Niigata (JP); HADA, Makoto, Niigata (JP)
(74) Representative: Jackson, Richard Eric
(86) International application number: PCT/JP2018/010466
(87) International publication number: WO 2018/180596

(57) **Abstract**

Provided is a vehicular display device capable of presenting appropriate information to a user without being affected by a change in the viewpoint of a user. The vehicular display device 10 is provided with: an image display unit 20 having a display screen 21 capable of displaying an image at least in a part thereof; an image generation unit 30 for generating the image to be displayed by the image display unit 20; and a projection unit 50 for projecting the image toward a transparent windshield 2 of a vehicle 1 so that the image is reflected by the transparent windshield 2 of the vehicle 1 such that a user seated in the driver seat of the vehicle 1 can view a virtual image 310. In accordance with a viewpoint position 100 of the user, the image generation unit 30 determines a length for display content 320 in a use area 220 of the display screen 21 of the image display unit 20 in a direction corresponding to a horizontal direction, the use area 220 being an area used for displaying the image.

## Description

### TECHNICAL FIELD

The present invention relates to a vehicular display device. In particular, the present invention relates to a vehicular display device capable of presenting appropriate information to a user without being affected by a change in a position of a viewpoint of a user.

### BACKGROUND ART

As a vehicular display device, there is a so-called head-up display that projects a display image on a light transmitting member such as a front window shield (also called window shield or front glass) of a vehicle, thereby making a virtual image visible to a user seated in a driver seat with the use of the light of the display image reflected by the front window shield. In such a vehicular display device, the virtual image is visually recognized by the user seated in the driver seat in such a manner that the virtual image is formed on a front side in the vehicle traveling direction with respect to the front window shield of the vehicle (the front side of the vehicle). As a general configuration of such a vehicular display device, for example, an image display unit that displays a display image and a projection unit configured of an optical system including a concave mirror for projecting the display image on a front window shield of a vehicle are included.

A user who sits in the driver seat of a vehicle equipped with such a vehicular display device can visually recognize, for example, a virtual image giving information on the presence of other vehicles, obstacles, and the like on a road ahead of the vehicle in a state where the virtual image is overlapped with a landscape seen through the front window shield. As a position at which the virtual image is visually recognized moves upward in the vertical direction of the front window shield, the virtual image is visually recognized as being overlapped with a distant landscape of the landscapes seen through the front window shield. Meanwhile, as a position at which the virtual image is visually recognized moves downward in the vertical direction of the front window shield, the virtual image is overlapped with a close landscape of the landscapes seen through the front window shield.

Here, depending on a user's sitting height, a position of the driver seat adjusted by the user, the sitting posture of the user, and the like, the position of the viewpoint of the user seated in the driver seat is not constant. For example, when a position where the display image is projected is fixed, as the position of the viewpoint of the user seated in the driver seat becomes higher, the virtual image is overlapped with the close landscape of the landscapes seen through the front window shield. As described above, when the position of the viewpoint of the user seated in the driver seat changes, an object in the landscape on which the virtual image is overlapped is deviated, which may thereby cause the user to feel uncomfortable.

Therefore, for example, Patent Document 1 discloses a head-up display device (vehicular display device) that adjusts a projection direction of an optical system including a concave mirror of a projection unit in accordance with a position of a viewpoint of a user seated in a driver seat of a vehicle. The vehicular display device disclosed in Patent Document 1 includes a concave mirror actuator that adjusts a projection angle of the concave mirror of the projection unit, and a viewpoint detection camera that acquires a position of the viewpoint of the user seated in the driver seat of the vehicle.

The vehicular display device disclosed in Patent Document 1 controls the concave mirror actuator in such a manner that a display image is projected in an upper side in a vertical direction of a front window shield when the position of the viewpoint of the user seated in the driver seat of the vehicle acquired by the viewpoint detection camera is high. Meanwhile, the vehicular display device disclosed in Patent Document 1 controls the concave mirror actuator in such a manner that a display image is projected in a lower side in the vertical direction of the front window shield when the position of the viewpoint of the user seated in the driver seat of the vehicle acquired by the viewpoint detection camera is low. Therefore, the vehicular display device disclosed in Patent Document 1 is configured to prevent a large deviation of an object in the landscapes seen through the front window shield, on which a virtual image is overlapped even when the position of the viewpoint of the user seated in the driver seat of the vehicle changes. As a result, it is possible to reduce uncomfortable feeling given to the user.

In addition, a vehicular display device disclosed in Patent Document 2 can determine a use area which is a part of a display screen of an image display unit and is used for displaying an image, in accordance with a position of a viewpoint of a user, in view of that, in the vehicular display device disclosed in Patent Document 1, the deviation of the object in the landscapes seen through the front window shield, on which the virtual image is overlapped is not sufficiently eliminated.

### PRIOR ART DOCUMENT

### PATENT DOCUMENT

Patent Document 1: Japanese Unexamined Patent Application Publication No. 2014-210537
Patent Document 2: Japanese Unexamined Patent Application Publication No. 2016-155446

### SUMMARY OF THE INVENTION

### PROBLEMS TO BE SOLVED BY THE INVENTION

However, in the vehicular display device disclosed in Patent Document 2, the inventors of the present invention recognize a distortion of a virtual image recognized by a user, and further recognize that the distortion of the virtual image causes the user to feel uncomfortable.

An object of the present invention is to provide a vehicular display device capable of presenting appropriate information to a user without being affected by a change in a position of a viewpoint of a user. Other objects of the present invention will become apparent to a person skilled in the art with reference to the aspects and the preferred modes described as examples below, and the appended drawings.

### SOLUTION TO PROBLEM

A first aspect according to the present invention relates to a vehicular display device including: an image display unit comprising a display screen capable of displaying an image; an image generation unit configured to generate the image displayed by the image display unit; and a projection unit configured to project the image toward a light transmitting member of the vehicle in such a manner that the image is reflected by the light transmitting member of the vehicle and thus the user seated in a driver seat of the vehicle can view a virtual image, wherein the image generation unit determines, in accordance with a position of a viewpoint of the user, a length in a direction corresponding to a horizontal direction of display content in a use area used to display the image as a part of the display screen of the image display unit.

In the vehicular display device, the virtual image visually recognized by the user is obtained by reflecting an image displayed on the use area on the display screen of the image display unit by a light transmitting member such as a front window shield. Therefore, an area where the virtual image is formed corresponds to the use area which is a part of the display screen. Here, the image generation unit determines a length in a direction corresponding to a horizontal direction of display content in a use area which is a part of the display screen of the image display unit, in accordance with a position of a viewpoint of the user (a position of a viewpoint set or adjusted by a manufacturer or the user, or a position of a viewpoint acquired by, for example, a viewpoint position acquisition unit). As a result, the vehicular display device of the first aspect can cope with a distortion of a virtual image recognized by the user. Therefore, the vehicular display device of the first aspect can present appropriate information to a user without being affected by a change in the position of the viewpoint of the user.

In the first aspect, the image generation unit determines an upper side length in the direction corresponding to the horizontal direction of the display content in the use area to be shorter than a lower side length as the position of the viewpoint of the user moves upward in a vertical direction, whereas in a second aspect according to the present invention,
the image generation unit may determine the upper side length in the direction corresponding to the horizontal direction of the display content in the use area to be longer than the lower side length as the position of the viewpoint of the user moves downward in the vertical direction.

In the second aspect, the image generation unit can appropriately determine the upper side length and/or the lower side length in the direction corresponding to the horizontal direction of the display content in the use area of the display screen in accordance with the position of the viewpoint of the user in the vertical direction.

In a third aspect according to the present invention, in the first or second aspect, the image generation unit may determine the upper side length and the lower side length in the direction corresponding to the horizontal direction of the display content in the use area in such a manner that a shape of the virtual image of the display content recognized by the user is constant, without being affected by a change in the position of the viewpoint of the user.

Appropriate information can be presented to the user by a shape of a virtual image of display content recognized by the user becoming constant without being affected by a change in the position of the viewpoint of the user.

In a fourth aspect according to the present invention, in the third aspect, the image generation unit may determine the use area in such a manner that the shape of the virtual image of the display content recognized by the user is a rectangle or a square, without being affected by a change in the position of the viewpoint of the user.

Appropriate information can be presented to the user by making the shape of the virtual image of the display content recognized by the user to be a rectangle or a square without being affected by a change in the position of the viewpoint of the user.

### BRIEF DESCRIPTION OF THE DRAWINGS

Fig. 1A is a block diagram illustrating an example of a configuration of a vehicular display device according to the present invention.
Fig. 1B is a diagram illustrating an example of a configuration of an image display unit illustrated in Fig. 1A.
Fig. 1C is a cross-sectional view of a projection unit illustrated in Fig. 1A.
Fig. 2 is a diagram illustrating an example of a landscape and a virtual image seen by a user seated in a driver seat of a vehicle equipped with the vehicular display device illustrated in Fig. 1A.
Fig. 3 is a flowchart illustrating an example of an operation of the vehicular display device illustrated in Fig. 1A.
Each of Fig. 4(A), Fig. 4(B) and Fig. 4(C) illustrates a relation between a position of a viewpoint of the user and a shape (comparative example) of the virtual image of display content recognized by the user.
Fig. 5A is a diagram illustrating a relation between a position of the viewpoint of the user and an image displayed by the image display unit of the vehicular display device illustrated in Fig. 1A.
Fig. 5B is a diagram illustrating a relation between a position of the viewpoint of the user and an image displayed by the image display unit of the vehicular display device illustrated in Fig. 1A.
Fig. 5C is a diagram illustrating a relation between a position of the viewpoint of the user and an image displayed by the image display unit of the vehicular display device illustrated in Fig. 1A.
Fig. 6 is a schematic diagram for explaining, in the vehicular display device according to the present invention, a relation among a position of the viewpoint of the user, an area where the user can visually recognize a virtual image, and a range of a distance on a road surface of a landscape overlapping an inside of the area where the user can visually recognize the virtual image.

### MODE FOR CARRYING OUT THE INVENTION

The preferred embodiments described below will be provided for easy understanding of the present invention. Therefore, a person skilled in the art should note that the present invention is not unduly limited by the embodiments described below.

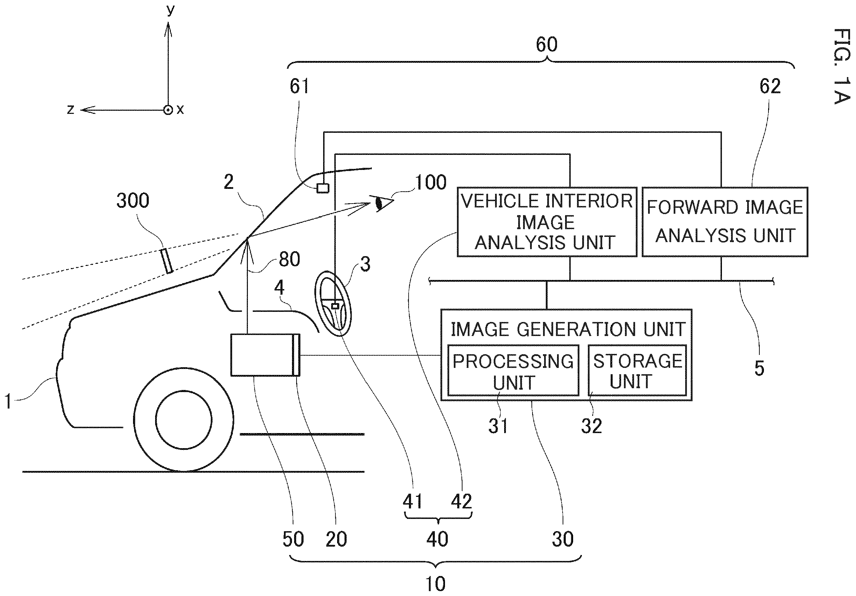

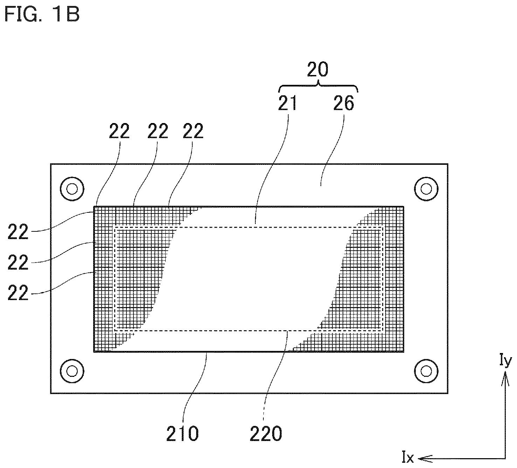

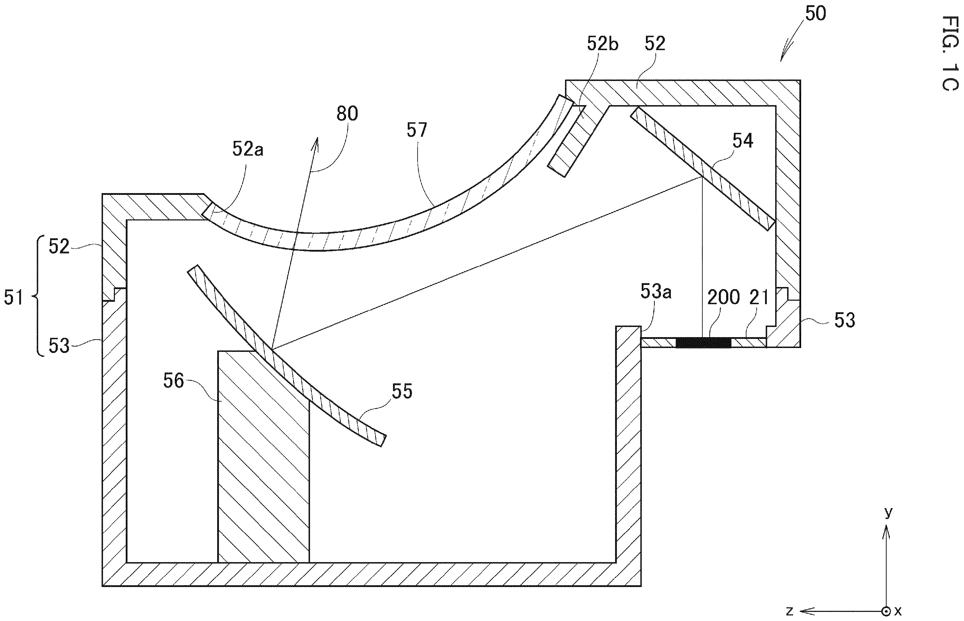

An example of an entire configuration of a vehicular display device 10 according to the present invention will be described with reference to Figs. 1A, 1B, and 1C. In order to facilitate the following description, as illustrated in Fig. 1A, in a real space, for example, a z-axis is defined in a vehicle anteroposterior direction with a traveling direction of a vehicle 1 as a vehicle front direction, a y-axis is defined in a vertical direction, and an x-axis is defined in a left-right direction (vehicle left-right direction) facing the vehicle front direction. In this case, an x-axis direction represents a vehicle left direction, a y-axis positive direction represents an upper side in the vertical direction, and a z-axis positive direction represents the vehicle front direction.

As illustrated in Fig. 1A, the vehicular display device 10 includes an image display unit 20, an image generation unit 30, a viewpoint position acquisition unit 40, and a projection unit 50. The vehicular display device 10 may further include, for example, a forward information acquisition unit 60 including a forward image acquisition unit 61 and a forward image analysis unit 62.

The image display unit 20 includes a display screen 21 capable of displaying an image. An area 210 capable of displaying an image on the display screen 21 is referred to as a display area 210, for example. An example of the display screen 21 is a liquid crystal panel 21 including a plurality of pixels 22, for example, as illustrated in Fig. 1B. In the liquid crystal panel 21, the display area 210 is, for example, the pixels 22 of the entire liquid crystal panel 21. An example of the image display unit 20 is, for example, a liquid crystal panel module 20 including the liquid crystal panel 21 and a drive circuit 26 of the liquid crystal panel 21.

For example, when a signal representing an image generated by the image generation unit 30 is input, the image display unit 20 displays the image with the use of at least a part of the pixels 22 of the display screen 21 in the display area 210 of the display screen 21 in accordance with the input signal. In the following description, while the liquid crystal panel module 20 is appropriately used as an example of the image display unit 20, the image display unit 20 may be another display device. For example, the image display unit 20 may be a self-light emitting display panel module such as an organic EL (Electro Luminescence) element, or a reflective type display panel module such as DMD (Digital Micromirror Device) or LCoS (Liquid Crystal on Silicon) (registered trademark), or a scanning display device or the like that scans laser light.

In order to facilitate the following description, as illustrated in Fig. 1B, for example, an Ix-axis is defined in a lateral direction of the display screen 21 in a viewpoint from the front of the display screen 21 of the image display unit 20, and an Iy-axis is defined in a vertical direction of the display screen 21. In this case, an Ix-axis positive direction represents a left direction of the display screen 21, and an Iy-axis positive direction represents an upward direction of the display screen 21.

The viewpoint position acquisition unit 40 includes, for example, a vehicle interior image acquisition unit 41 and a vehicle interior image analysis unit 42. The viewpoint position acquisition unit 40 acquires a position 100 of a viewpoint of a user seated in a driver seat of the vehicle 1. Hereinafter, the position 100 of the viewpoint of the user seated in the driver seat of the vehicle 1 is also referred to as a user viewpoint position 100. The viewpoint position acquisition unit 40 is configured to be able to acquire the user viewpoint position 100 in at least one of the y-axis direction and the z-axis direction. The viewpoint position acquisition unit 40 may be configured to be able to acquire the user viewpoint position 100 in both the y-axis direction and the z-axis direction.

The vehicle interior image acquisition unit 41 is, for example, an in-vehicle camera that captures an image of an interior of a vehicle. The vehicle interior image acquisition unit 41 may be, for example, a shared in-vehicle camera or the like attached for the purpose of preventing vehicle theft or the like, or may be an in-vehicle camera or the like dedicated to the vehicular display device 10. It is preferable that the vehicle interior image acquisition unit 41 captures the user viewpoint position 100 from a lower side in the vertical direction than the user viewpoint position 100, and may be attached to, for example, a steering handle 3 or the like. In addition, it is preferable that the vehicle interior image acquisition unit 41 is capable of infrared imaging in such a manner that the user viewpoint position 100 can be acquired even when the vehicle interior is dark. Furthermore, in order to configure the viewpoint position acquisition unit 40 so as to be able to acquire the user viewpoint position 100 in at least the z-axis direction, the viewpoint position acquisition unit 40 may be, for example, a stereo camera or the like. The vehicle interior image acquisition unit 41 outputs, for example, the acquired vehicle interior image to the vehicle interior image analysis unit 42.

The vehicle interior image analysis unit 42 analyzes the input vehicle interior image with the use of, for example, known image processing, pattern matching method, and the like. As a result of analyzing the input image of the vehicle front, when the input vehicle interior image contains a face of the user seated in the driver seat, the vehicle interior image analysis unit 42 specifies a coordinate (y, z) of the user viewpoint position 100 in, for example, a real space, thereby acquiring the user viewpoint position 100. The vehicle interior image analysis unit 42 outputs, for example, the acquired user viewpoint position 100 to the image generation unit 30 via the bus 5 such as CAN (Controller Area Network) bus communication. Here, the vehicle interior image analysis unit 42 may be included, for example, in an in-vehicle camera, and the image generation unit 30 may include a function of the vehicle interior image analysis unit 42. In addition, the viewpoint position acquisition unit 40 may acquire the user viewpoint position 100 in the vertical direction by the in-vehicle camera and input a signal from a sensor (not illustrated) that detects a seat position, thereby acquiring the user viewpoint position 100 in the vehicle anteroposterior direction. Furthermore, the image generation unit 30 may directly input the user viewpoint position 100 from the vehicle interior image analysis unit 42 without via the bus 5.

The forward information acquisition unit 60 includes, for example, a forward image acquisition unit 61 and a forward image analysis unit 62. The forward information acquisition unit 60 acquires vehicle forward information such as position information of a lane of a road in the vehicle front direction, position information of other vehicles and obstacles existing in the vehicle front direction, and information of a road sign in the vehicle front direction.

The forward image acquisition unit 61 is, for example, an out-vehicle camera that captures an image of the front of a vehicle. The forward image acquisition unit 61 may be, for example, a shared out-vehicle camera or the like used in a drive recorder, or may be an out-vehicle camera or the like dedicated to the vehicular display device 10. In addition, the out-vehicle camera may be a single-eye camera; however, in order to accurately obtain a distance between an object present ahead of the vehicle and the own vehicle 1, the out-vehicle camera is preferably a stereo camera. In addition, the out-vehicle camera may be capable of infrared imaging in such a manner that an image in front of the vehicle can be captured even when the front of the vehicle is dark. The forward image acquisition unit 61 outputs, for example, the acquired vehicle forward image to the forward image analysis unit 62.

The forward image analysis unit 62 analyzes the input vehicle forward image with the use of, for example, known image processing, pattern matching method, and the like. The forward image analysis unit 62 analyzes the input vehicle forward image, thereby acquiring forward information (a lane, a white line, a stop line, a pedestrian crossing, a width of the road, a number of lanes, an intersection, a curve, a branch, etc.) regarding a road shape ahead of the vehicle. In addition, the forward image analysis unit 62 analyzes the input vehicle forward image, thereby acquiring forward information such as a position and a size of other vehicles, an obstacle, and the like existing ahead of the vehicle, a distance to the own vehicle 1, and a relative speed with the own vehicle 1. The forward image analysis unit 62 outputs, for example, the acquired forward information to the image generation unit 30 via the bus 5. Here, the forward image analysis unit 62 may be included, for example, in an out-vehicle camera, and the image generation unit 30 may include a function of the forward image analysis unit 62. In addition, the image generation unit 30 may directly input the forward information from the forward image analysis unit 62 without via the bus 5.

Further, the forward information acquisition unit 60 may include a laser radar, a millimeter wave radar, an ultrasonic sensor, or another known sensor or the like instead of or in combination with the forward image acquisition unit 61. In this case, the forward image analysis unit 62 may input and analyze data output from the laser radar, the millimeter wave radar, the ultrasonic sensor, the known sensor or the like instead of or in combination with a vehicle forward image, thereby acquiring the forward information as described above.

Here, the forward information acquisition unit 60 may be, for example, a map data storage unit (specifically, for example, a drive device such as an SSD, an HDD, or a DVD) that stores map data, or may be a communication unit (specifically, a communication module such as a Wi-Fi (registered trademark) (wireless fidelity) module, a telephone communication network module, etc.) capable of receiving map data from an information device storing the map data, such as a server external to a vehicle, and a personal computer, a smartphone inside or outside the vehicle. The map data may be 2D map data, but is preferably 3D map data, more preferably high precision 3D map data, and includes, for example, road link information which is information on roads constituting the map, and may include forward information on a road shape that can be analyzed by the aforementioned forward image analysis unit 62.

Furthermore, while the vehicle interior image acquisition unit 41 and the forward image acquisition unit 61 are illustrated as being attached to another place in the vehicle 1 in Fig. 1A, the present invention is not necessarily limited to this, and the vehicle interior image acquisition unit 41 and the forward image acquisition unit 61 may be attached to a same place in the vehicle 1. Moreover, the vehicle interior image acquisition unit 41 and the forward image acquisition unit 61 may be provided in one same casing.

The image generation unit 30 includes a processing unit 31 and a storage unit 32. The processing unit 31 includes, for example, one or more microprocessors, a microcontroller, an ASIC (Application Specific Integrated circuit), a FPGA (Field-Programmable Gate Array), any other IC (Integrated Circuit), and the like. The storage unit 32 includes, for example, one or more memories capable of storing programs and/or data, such as a RAM (Random Access Memory), a ROM (Read Only Memory), an EEPROM (Electrically Erasable Programmable Read-Only Memory), and a flash memory which is a non-volatile memory.

The image generation unit 30 generates the image to be displayed by the image display unit 20, for example, by the processing unit 31 executing a program stored in the storage unit 32. The image generation unit 30 can include in the image to be generated, for example, a notification mark that can notify the user that there is a notification object such as an other vehicle or an obstacle on a road ahead of a vehicle, in accordance with the forward information input from the forward information acquisition unit 60. Further, the image generation unit 30 can include in the image to be generated, for example, a navigation mark that can present route information to the user, in accordance with a signal input directly from a navigation device (not illustrated) via the bus 5. In addition, the image generation unit 30 can further include in the image to be generated, for example, other information such as vehicle information such as a fuel remaining amount, a current vehicle speed, a fuel consumption, and a battery remaining amount, in accordance with the information input directly from another ECU (Electronic Control Unit) (not illustrated) or the like via the bus 5. The image generation unit 30 may generate an image including only information other than this.

In addition, the image generation unit 30 determines a use area 220 which is a part used to display an image in the display area 210 of the display screen 21 of the image display unit 20 in accordance with the user viewpoint position 100 input from the viewpoint position acquisition unit 40. The use area 220 is, for example, a range 220 of the pixels 22 used to display an image in the display area 210 which is the entire pixels 22 of the liquid crystal panel 21 in the example of the image display unit 20 illustrated in Fig. 1B.

For example, the storage unit 32 of the image generation unit 30 stores a table in which the user viewpoint position 100 and a parameter for determining the use area 220 corresponding to the user viewpoint position 100 are associated. The image generation unit 30 determines the use area 220 corresponding to the input user viewpoint position 100 by, for example, the processing unit 31 referring to the table.

In addition, for example, the storage unit 32 of the image generation unit 30 stores an arithmetic expression for determining the use area 220 corresponding to the user viewpoint position 100. The image generation unit 30 determines the use area 220 corresponding to the input user viewpoint position 100 by, for example, the processing unit 31 referring to the arithmetic expression. The relation between the user viewpoint position 100 and the use area 220 corresponding to the user viewpoint position 100 will be described later.

The projection unit 50 projects the image displayed by the image display unit 20 toward the light transmitting member 2 such as a front window shield 2 of the vehicle 1. The light 80 constituting the projected image is reflected by the front window shield 2 into the vehicle interior. Hereinafter, the light 80 constituting the image is also referred to as image light 80. The projection unit 50 projects the image in such a manner that the image light 80 reflected by the front window shield 2 is incident toward the user viewpoint position 100. In addition, the light transmitting member 2 of the vehicle 1 may be a combiner provided in the vehicle 1.

The user seated in the driver seat can visually recognize the virtual image 310 formed on the vehicle front side with respect to the front window shield 2 by the image light 80 being incident on the user viewpoint position 100. The user can visually recognize the virtual image 310 in a state where, for example, at least a part of the view seen through the front window shield 2 and the virtual image 310 overlap. This virtual image 310 includes, for example, a virtual image notification mark 320 that is a virtual image of the notification mark described above, a virtual image navigation mark 340 that is a virtual image of the navigation mark described above, virtual image marks of the other marks described above, and the like.

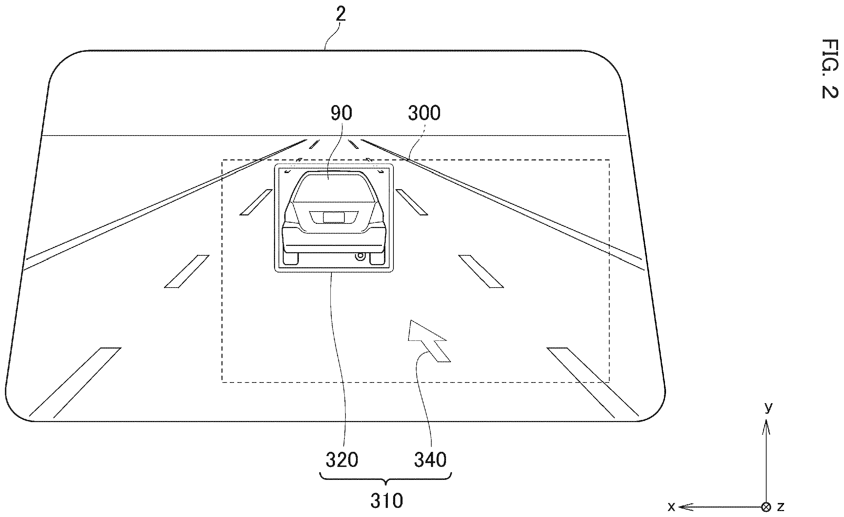

In particular, in Fig. 2, the virtual image notification mark 320 is typically a mark surrounding an outer periphery of a notification object (landscape) such as a forward vehicle 90, and is specifically, a quadrangle, more specifically, a square or a rectangle. Of course, as illustrated in Fig. 2 of Patent Document 2, the virtual image notification mark 320 may be, for example, a triangle.

An example of a structure of the projection unit 50 will be described with the use of Fig. 1C. The projection unit 50 houses an optical system such as a plane mirror 54 and a concave mirror 55 and an actuator 56, in a casing 51, for example. The casing 51 includes, for example, an upper case 52 and a lower case 53 which are disposed in a dashboard 4 of the vehicle 1 and formed of a black light shielding synthetic resin or the like. An upper case opening 52a is provided substantially in the middle in the z-axis direction of the upper case 52. The upper case opening 52a is covered with a transparent cover 57 formed of, for example, a transparent light transmitting synthetic resin. For example, a lower case opening 53a is provided in the vehicle rear side of the lower case 53. The lower case opening 53a is provided in the lower case 53 in such a manner that the image light 80 emitted from the display screen 21 of the image display unit 20 attached to the outside of the casing 51 can enter, for example.

The plane mirror 54 is attached on the vehicle rear side of the lower case 53 via, for example, an attachment member (not illustrated). The attachment position and the attachment angle of the plane mirror 54 are fixed so as to reflect, the image light 80 emitted from the display screen 21 incident from the lower case opening 53a, toward the vehicle front direction, for example.

The concave mirror 55 is attached on the vehicle front side with respect to the plane mirror 54 of the lower case 53 via, for example, the actuator 56. The attachment angle of the concave mirror 55 can be rotated by the actuator 56, with the x-axis as an axis of rotation, for example. The concave mirror 55 is, for example, fixed in position so as to receive the image light 80 reflected by the plane mirror 54, and the attachment angle is finely adjusted so as to reflect the incident image light 80 toward the front window shield 2. For example, a table or an arithmetic expression for determining the user viewpoint position 100 stored in the storage unit 32 of the image generation unit 30 and the use area 220 corresponding to the user viewpoint position 100 is corrected in accordance with the attachment angle.

In particular, a table or arithmetic expression for determining a length in the direction corresponding to the horizontal direction of the virtual image notification mark 320 (display content in a broad sense) in the use area 220 corresponding to the user viewpoint position 100 may be corrected in accordance with the attachment angle.

The actuator 56 includes, for example, a motor, a decelerating mechanism, a concave mirror rotation member, and a support member of the concave mirror 55, none of which are illustrated. The actuator 56 is attached to the lower case 53 below the concave mirror 55 in the vertical direction via, for example, an attachment member (not illustrated). The actuator 56 rotates a motor in accordance with a signal input from an actuator control unit (not illustrated), decelerates the rotation of the motor by the decelerating mechanism, transmits same to the concave mirror rotation member to rotate the concave mirror 55. The actuator 56 needs not necessarily be provided.

In addition, in the upper case 52 of the casing 51 of Fig. 1C, a light shielding section 52b is provided between the upper case opening 52a and the plane mirror 54. The light shielding section 52b is provided, for example, in order to prevent the light from the outside of the casing 51 incident from the upper case opening 52a from traveling to the image display unit 20. The example of the structure of the projection unit 50 that has been described with reference to Fig. 1C is merely an example, and does not limit the structure of the projection unit 50 of the vehicular display device 10 at all.

Fig. 2 illustrates an example of a landscape and a virtual image 310 seen by the user seated in the driver seat of the vehicle 1 through the front window shield 2. In the example illustrated in Fig. 2, as an example of a landscape seen through the front window shield 2, a three-lane road or the like extending in front of the vehicle and another vehicle (forward vehicle) 90 existing in front of the vehicle are illustrated. In the example of the landscape seen through the front window shield 2 illustrated in Fig. 2, the notification object is the forward vehicle 90. In the example illustrated in Fig. 2, the virtual image 310 includes the virtual image notification mark 320. In the example illustrated in Fig. 2, the virtual image notification mark 320 is overlapped with the forward vehicle 1 and visually recognized by the user. In addition, in the example illustrated in Fig. 2, the virtual image 310 includes a virtual image navigation mark 340.

In addition, in the example illustrated in Fig. 2, an area 300 is the area 300 corresponding to the use area 220 on the display screen 21 of the image display unit 20. Hereinafter, the area 300 corresponding to the use area 220 on the display screen 21 of the image display unit 20 is also referred to as a virtual image area 300. That is, the virtual image area 300 is an area where the user can visually recognize the virtual image 310.

In addition, the Ix-axis positive direction in the display screen 21 of the image display unit 20 in Fig. 1B corresponds to, for example, the x-axis positive direction, that is, the vehicle left direction in the virtual image area 300. Similarly, the Iy-axis positive direction in the display screen 21 of the image display unit 20 in Fig. 1B corresponds to, for example, the y-axis positive direction, that is, the upper side in the vertical direction in the virtual image area 300.

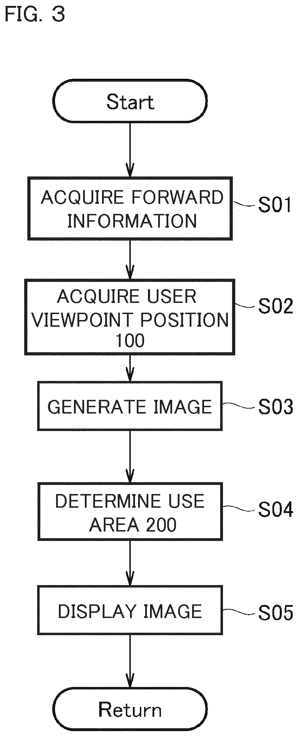

An example of an operation of the vehicular display device 10 will be described with reference to Fig. 3. For example, the operation of the vehicular display device 10 is started after a predetermined waiting time has elapsed since when a power of the vehicle 1 is turned on, when an engine (not illustrated) is driven, or when the power of the vehicle 1 is turned on or the engine is driven.

In step S01, the forward information acquisition unit 60 acquires forward information. In step S02, the viewpoint position acquisition unit 40 acquires the user viewpoint position 100. The steps S01 and S02 do not necessarily have to be in this order, and the order may be reversed.

In step S03, the image generation unit 30 generates, for example, an image including a notification mark, a navigation mark, and other marks (display content) in accordance with the forward information acquired by the forward information acquisition unit 60 in step S01. The image generation unit 30 does not need to generate an image corresponding to the user viewpoint position 100, but preferably generates an image corresponding to the user viewpoint position 100.

In step S04, it is preferable that the image generation unit 30 determines the use area in the display area 210 of the display screen 21 of the image display unit 20 in accordance with the user viewpoint position 100 acquired by the viewpoint position acquisition unit 40 in step S02; however, the use area may not be determined in accordance with the user viewpoint position 100. The steps S03 and S04 do not necessarily have to be in this order, and the order may be reversed.

In step S05, the image display unit 20 displays the image generated in step S03 with the use of all the pixels 22 in the use area 220 determined by the image generation unit 30 in step S04. After the process of step S05 is performed, the flow returns to Start. Here, a predetermined standby time may be inserted after the execution of the process of step S05 is finished until the flow returns to Start in such a manner that the flowchart illustrated in Fig. 3 is repeatedly executed at each predetermined interval set in advance.

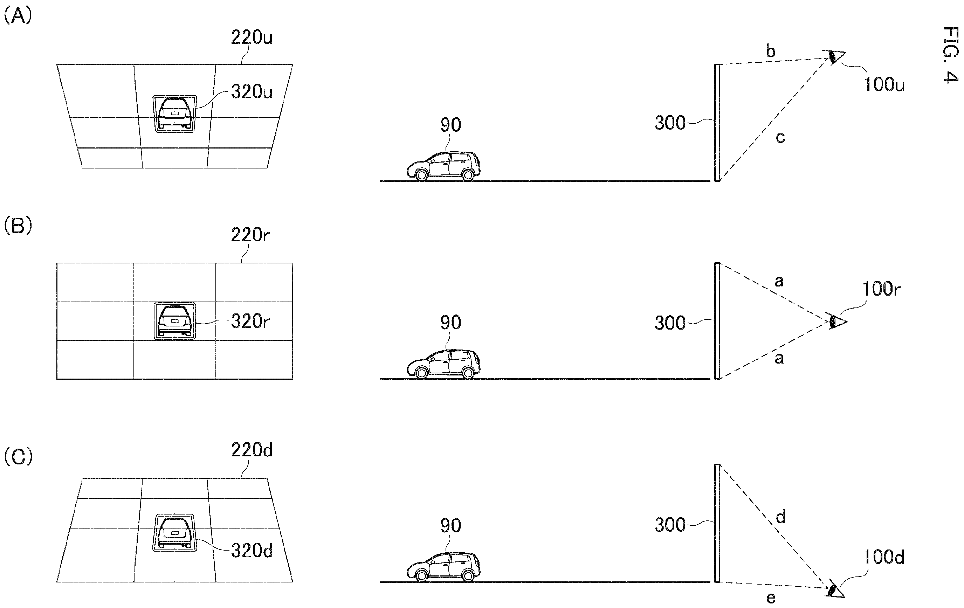

With reference to Figs. 4(A) to 4(C), a relation between the position 100 of the viewpoint of the user and the shape of the virtual image (typically, the virtual image notification mark 320) of the display content recognized by the user (comparative example) (specifically, an outer peripheral shape) will be described. The right sides of Figs. 4(A) to 4(C) represent the user viewpoint position 100 on the y-axis in a real space, and represent a positional relationship between the user viewpoint position 100 moving up and down along the y-axis and the virtual image area 300 (virtual image display screen). The left sides of Figs. 4(A) to 4(C) represent the shape (comparative example) of the virtual image notification mark 320 on the virtual image display screen that the user recognizes from the user viewpoint position 100 moving up and down along the y-axis.

The dimensions in Figs. 4(A) to 4(C) do not necessarily represent the dimensions as illustrated in the drawings, in other words, the dimensions in Figs. 4(A) to 4(C) are exaggerated or simplified or modeled in such a manner that a person skilled in the art can easily understand the shape (comparative example) of the virtual image notification mark 320 that changes in accordance with the user viewpoint position 100.

The virtual image notification marks 320 illustrated in Figs. 4(A) to 4(C) can draw attention to the user by expressing a frame surrounding the forward vehicle 90. The use area 220r displayed on the left side of Fig. 4(B) corresponds to the use area 220 of Fig. 1B, and as an example, the use area 220 can be fixed. In this case, the use areas 220u and 220d displayed on the left sides of Figs. 4(A) and 4(C) also correspond to the use area 220 of Fig. 1B. Of course, as described later, it is preferable to determine or change the position of the use area 220 in accordance with the user viewpoint position 100. Referring to Fig. 4(B), when a line (not illustrated) connecting a center of the virtual image area 300 (virtual image display screen) and a user viewpoint position 100r is perpendicular to the virtual image display screen, a distance a between an upper side of the virtual image area 300 and the user viewpoint position 100r is equal to a distance a between a lower side of the virtual image area 300 and the user viewpoint position 100r, and therefore, no distortion occurs in a virtual image notification mark 320r, and the shape of the virtual image notification mark 320r (specifically, the outer peripheral shape) is a rectangle.

However, when a user viewpoint position 100u is vertically above the user viewpoint position 100r (reference viewpoint position), in other words, when a distance b between the upper side of the virtual image area 300 and the user viewpoint position 100u is shorter than a distance b between the lower side of the virtual image area 300 and the user viewpoint position 100u, a distortion occurs in a virtual image notification mark 320u recognized by the user, and the outer peripheral shape of the virtual image notification mark 320u is a trapezoid, an upper side of which is longer than a lower side (see Fig. 4(A)).

It is preferable that the position of the virtual image notification mark 320u in the use area 220u of Fig. 4(A) is moved upward in such a manner that the forward vehicle 90 looks differently, in other words, is overlapped with the forward vehicle 90, in accordance with the user viewpoint position 100. In order for a person skilled in the art to easily understand this, the use area 220u has a grid (auxiliary lines equally dividing the virtual image display screen), but the grid is not actually displayed, in other words, the grid is not the display content, and therefore invisible to the user. The farther the forward vehicle 90 that is the notification object is from the user viewpoint position 100u, the less the influence of the user viewpoint position 100u, and thus the upward moving amount of the virtual image notification mark 320r (display content) is preferably determined in accordance with a distance to the user viewpoint position 100u or the own vehicle 1.

Similarly, when a user viewpoint position 100d is vertically below the user viewpoint position 100r (reference viewpoint position), in other words, when a distance d between the upper side of the virtual image area 300 and the user viewpoint position 100d is longer than a distance e between the lower side of the virtual image area 300 and the user viewpoint position 100d, a distortion occurs in a virtual image notification mark 320d recognized by the user, and the outer peripheral shape of the virtual image notification mark 320d is a trapezoid, a upper side of which is shorter than a lower side (see Fig. 4(C)). Here, it is preferable that the position of the virtual image notification mark 320d in the use area 220d of Fig. 4(C) is moved downward so as to overlap with the forward vehicle 90, and in addition, it is further preferable that the downward moving amount of the virtual image notification mark 320d (display content) is determined in accordance with a distance to the user viewpoint position 100d or the own vehicle 1.

In view of the problem (distortion) of the outer peripheral shape (comparative example) of virtual image notification mark 320 in Figs. 4(A) and 4(C), the image generation unit 30 according to the present invention can generate an image including display content according to the user viewpoint position 100, for example, in step S03 illustrated in Fig. 3.

Specifically, the image generation unit 30 determines an upper side length (the upper side of the trapezoid of Fig. 4(A)) in the direction corresponding to the horizontal direction of the virtual image notification mark 320u to be shorter than a lower side length (the lower side of the trapezoid of Fig. 4(A)) as the user viewpoint position 100u moves more upward in the vertical direction than the user viewpoint position 100r, in other words, the image generation unit 30 performs keystone correction on the trapezoid in Fig. 4(A), and makes the trapezoid rectangular when it is recognized by the user. With this, the outer peripheral shape of the virtual image notification mark 320u recognized by the user becomes constant without being affected by a change in the user viewpoint position 100u, and the user does not feel uncomfortable.

Similarly, the image generation unit 30 determines an upper side length (the upper side of the trapezoid of Fig. 4(C)) in the direction corresponding to the horizontal direction of the virtual image notification mark 320d to be longer than a lower side length (the lower side of the trapezoid of Fig. 4(C)) as the user viewpoint position 100d moves more downward in the vertical direction than the user viewpoint position 100d, in other words, the image generation unit 30 performs keystone correction on the trapezoid in Fig. 4(C), and makes the trapezoid rectangular when it is recognized by the user. With this, the outer peripheral shape of the virtual image notification mark 320d recognized by the user becomes constant without being affected by a change in the user viewpoint position 100d, and the user does not feel uncomfortable. When the outer peripheral shape of the virtual image notification mark 320r in Fig. 4(B) is, for example, a square, the image generation unit 30 can generate the virtual image notification marks 320u and 320d in such a manner that the outer peripheral shapes of the virtual image notification marks 320u and 320d in Figs. 4(A) and 4(C) recognized by the user are also square.

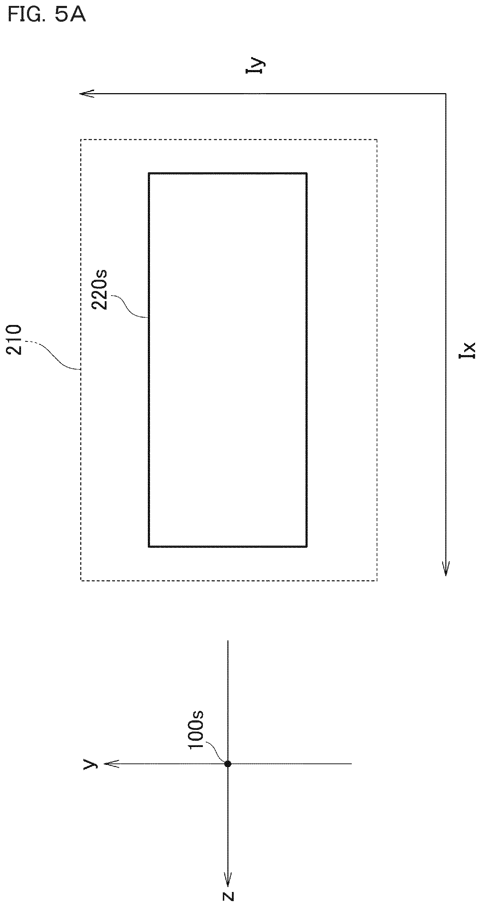

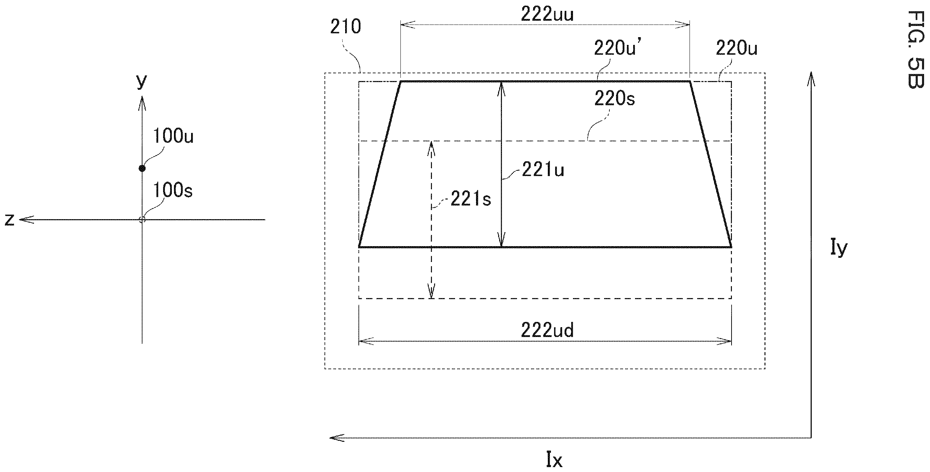

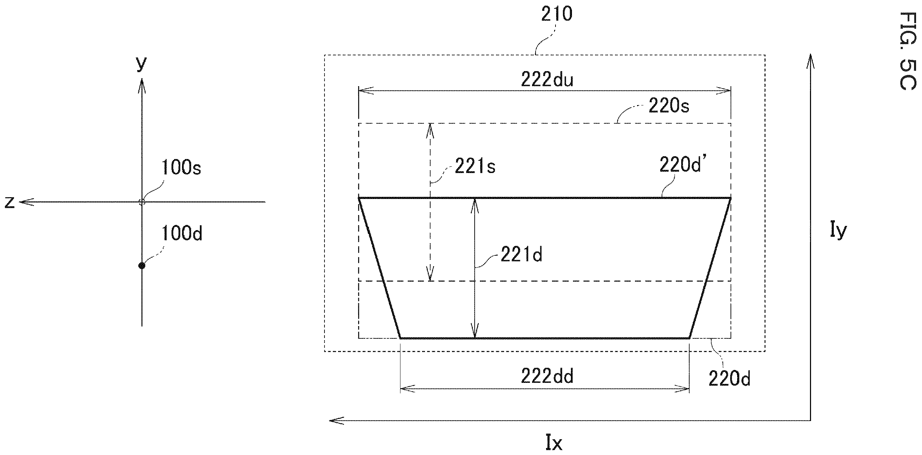

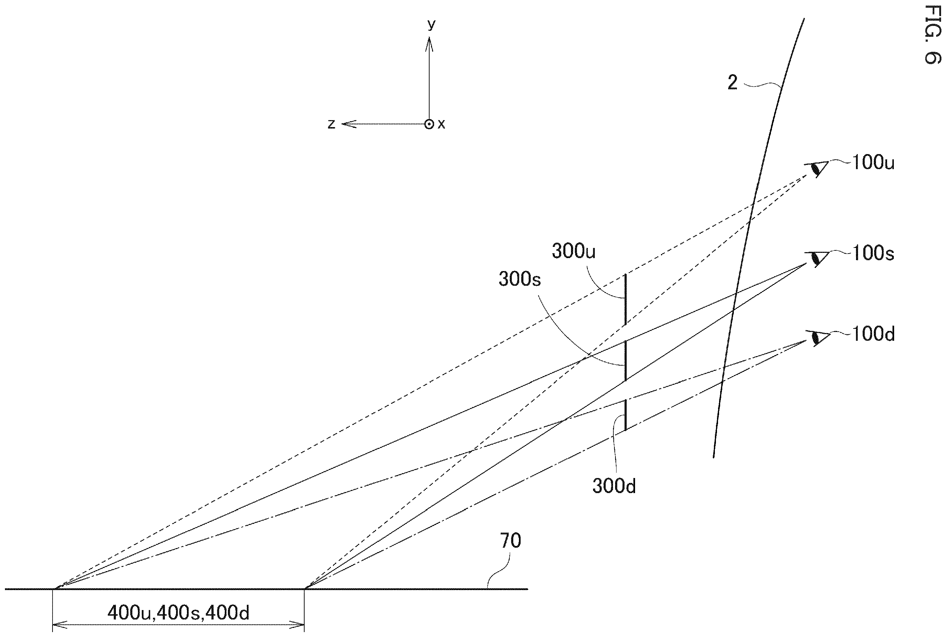

The relation between the user viewpoint position 100 and the use area 220 corresponding to the user viewpoint position 100 will be described with reference to Figs. 5A, 5B, 5C and 6. On the left sides of Figs. 5A, 5B, and 5C, coordinate axes representing the user viewpoint position 100 in the y-axis and z-axis in a real space are illustrated. In addition, on the right sides of Figs. 5A, 5B, and 5C, a use area 220 in the display area 210 of the display screen 21 of the image display unit 20, which is determined by the image generation unit 30 to be used to display an image, is illustrated corresponding to the user viewpoint position 100 in the y-axis and z-axis in a real space.

Fig. 6 is a schematic diagram for explaining, in the vehicular display device 10, a relation among the user viewpoint position 100, the virtual image area 300, and a range of a distance on a road surface 70 of a landscape overlapping an inside of the virtual image area 300. Fig. 6 exaggerates an amount of change in the user viewpoint position 100 in order to explain in an easy-to-understand manner the relation among the user viewpoint position 100 in the vertical direction, the virtual image area 300, and the range of the distance on the road surface 70 of the landscape overlapping the inside of the virtual image area 300. Specifically, the distances in the vertical direction between the user viewpoint position 100r and the user viewpoint position 100d, and between the user viewpoint position 100r and the user viewpoint position 100u illustrated in Fig. 6 are actually closer. As a result, Fig. 5 illustrates in such a manner that the virtual image area 300r, the virtual image area 300u, and the virtual image area 300d do not overlap. However, as illustrated in Figs. 5B and 5C, in reality, at least the virtual image area 300r and the virtual image area 300u, and the virtual image area 300r, and the virtual image area 300d partially overlap. Hereinafter, the range of the distance on the road surface 70 of the landscape overlapping the inside of the virtual image area 300 is also referred to as an overlapping distance range 400.

Fig. 6 illustrates the virtual image area 300r at the user viewpoint position 100r illustrated in Fig. 5A, the virtual image area 300u at the user viewpoint position 100u illustrated in Fig. 5B, and the virtual image area 300d at the user viewpoint position 100d illustrated in Fig. 5C. In addition, Fig. 6 illustrates an overlapping distance range 400r which is a range of the distance on the road surface 70 of the landscape overlapping with the inside of the virtual image area 300r, of the landscape seen through the front window shield 2 at the user viewpoint position 100r, an overlapping distance range 400u which is a range of the distance on the road surface 70 of the landscape overlapping with the inside of the virtual image area 300u, of the landscape seen through the front window shield 2 at the user viewpoint position 100u, and an overlapping distance range 400d which is a range of the distance on the road surface 70 of the landscape overlapping with the inside of the virtual image area 300d, of the landscape seen through the front window shield 2 at the user viewpoint position 100d.

First, the relation between the user viewpoint position 100 in the vertical direction and the use area 220 corresponding to the user viewpoint position 100 in the vertical direction will be described. The user viewpoint position 100r illustrated in Fig. 5A is represented at an intersection of the y-axis and the z-axis on the coordinate axes illustrated in Fig. 5A. Hereinafter, the user viewpoint position 100r illustrated in Fig. 5A is also referred to as a reference user viewpoint position 100r. For example, when the user viewpoint position 100 acquired in step S02 illustrated in Fig. 3 is the reference user viewpoint position 100r, in step S04 illustrated in Fig. 3, the image generation unit 30 determines the use area 220 in the display area 210 of the display screen 21 of the image display unit 20 as the use area 220r illustrated in Fig. 5A. Hereinafter, the use area 220r corresponding to the reference user viewpoint position 100r illustrated in Fig. 5A is also referred to as a reference use area 220r.

The user viewpoint position 100u illustrated in Fig. 5B is an example of the user viewpoint position 100 located in the upper side in the vertical direction compared to the reference user viewpoint position 100r. For example, when the user viewpoint position 100 acquired in step S02 illustrated in Fig. 3 is the user viewpoint position 100u, in step S04 illustrated in Fig. 3, the image generation unit 30 determines the use area 220 in the display area 210 of the display screen 21 of the image display unit 20 as the use area 220u (a rectangle with a dashed double-dotted line) illustrated in Fig. 5B.

The use area 220u illustrated in Fig. 5B is located on the Iy-axis positive direction side as compared to the reference use area 220r. In addition, a length 221u in the Iy-axis direction in the use area 220u illustrated in Fig. 5B is longer than a length 221r in the Iy-axis direction in the reference use area 220r. As a result, as illustrated in Fig. 6, the virtual image area 300u corresponding to the use area 220u is located in the upper side in the vertical direction in a real space as compared to the virtual image area 300r corresponding to the reference use area 220r, and the length in the vertical direction in the real space becomes long. The use area 220u overlaps with a part of the reference use area 220r.

That is, as the user viewpoint position 100 detected by the viewpoint position acquisition unit 40 moves upward in the vertical direction, the position of the use area 220 of the display screen 21 is determined to be located on the Iy-axis positive direction side. In addition, as the user viewpoint position 100 detected by the viewpoint position acquisition unit 40 moves upward in the vertical direction, the length of the use area 220 of the display screen 21 in the Iy-axis direction is determined to be long. As a result, as the user viewpoint position 100 detected by the viewpoint position acquisition unit 40 moves upward in the vertical direction, the virtual image area 300 is located in the upper side in the vertical direction in the real space, and the length in the vertical direction in the real space becomes long.

However, in order to eliminate the distortion described with reference to Fig. 4(A), it is preferable that the use area 220u (the rectangle with the dashed double-dotted line) is changed to a use area 220u' having a trapezoidal shape (a trapezoidal shape in which an upper side 222uu is shorter than a lower side 222ud) indicated by a solid line (see Fig. 5B). In other words, it is preferable to generate the outer peripheral shape of the virtual image notification mark 320u in Fig. 4(A) in accordance with the outer peripheral shape of the trapezoidal use area 220u'. Similarly, in order to eliminate the distortion described with reference to Fig. 4(C), it is preferable that the use area 220d (the rectangle with the dashed double-dotted line) is changed to a use area 220d' having a trapezoidal shape (a trapezoidal shape in which an upper side 222du is longer than a lower side 222dd) indicated by a solid line. In other words, it is preferable to generate the outer peripheral shape of the virtual image notification mark 320d in Fig. 4(C) in accordance with the outer peripheral shape of the trapezoidal use area 220d'. With this, the outer peripheral shapes of the virtual image notification marks 320u and 320u recognized by the user and the use areas 220u and 220d become constant or, for example, a rectangle without being affected by a change in the user viewpoint position 100u, and the user does not feel uncomfortable.

The user viewpoint position 100d illustrated in Fig. 5C is an example of the user viewpoint position 100 located in the lower side in the vertical direction compared to the reference user viewpoint position 100r. For example, when the user viewpoint position 100 acquired in step S02 illustrated in Fig. 3 is the user viewpoint position 100d, in step S04 illustrated in Fig. 3, the image generation unit 30 determines the use area 220 in the display area 210 of the display screen 21 of the image display unit 20 as the use area 220d (a rectangle with a dashed double-dotted line) illustrated in Fig. 5C.

The use area 220d illustrated in Fig. 5C is located on the Iy-axis negative direction side as compared to the reference use area 220r. In addition, a length 221d in the Iy-axis direction in the use area 220d illustrated in Fig. 5C is shorter than a length 221r in the Iy-axis direction in the reference use area 220r. As a result, as illustrated in Fig. 5, the virtual image area 300d corresponding to the use area 220d illustrated in Fig. 5C is located in the lower side in the vertical direction in a real space as compared to the virtual image area 300r corresponding to the reference use area 220r, and the length in the vertical direction in the real space becomes short. The use area 220d overlaps with a part of the reference use area 220r.

That is, as the user viewpoint position 100 detected by the viewpoint position acquisition unit 40 moves downward in the vertical direction, the position of the use area 220 of the display screen 21 is determined to be located on the Iy-axis negative direction side. In addition, as the user viewpoint position 100 detected by the viewpoint position acquisition unit 40 moves downward in the vertical direction, the length of the use area 220 of the display screen 21 in the Iy-axis direction is determined to be short. As a result, as the user viewpoint position 100 detected by the viewpoint position acquisition unit 40 moves downward in the vertical direction, the virtual image area 300 is located in the lower side in the vertical direction in the real space, and the length in the vertical direction in the real space becomes short.

Here, referring to Fig. 6, the overlapping distance range 400r, the overlapping distance range 400u, and the overlapping distance range 400d coincide with one another. As in the example illustrated in Fig. 6, the amount of change in the vertical direction of the virtual image area 300 is small with respect to the amount of change in the user viewpoint position 100 in the vertical direction. Then, for example, as the user viewpoint position 100 moves upward in the vertical direction, an angle between a line of sight where the user looks at the virtual image area 300 and a horizontal surface increases. Meanwhile, for example, as the user viewpoint position 100 moves downward in the vertical direction, the angle between the line of sight where the user looks at the virtual image area 300 and the horizontal surface decreases.

As a result, in order to make the overlapping distance range 400 constant without being affected by the user viewpoint position 100 in the vertical direction, it is not only necessary to set the position in the vertical direction of the virtual image area 300 to the upper side in the vertical direction, but also necessary to increase the length in the vertical direction as the user viewpoint position 100 moves upward in the vertical direction. Similarly, in order to make the overlapping distance range 400 constant without being affected by the user viewpoint position 100 in the vertical direction, it is not only necessary to set the position in the vertical direction of the virtual image area 300 to the lower side in the vertical direction, but also necessary to decrease the length in the vertical direction as the user viewpoint position 100 moves downward in the vertical direction.

That is, by appropriately determining the position in the Iy-axis and the length in the Iy-axis of the use area 220 in accordance with the user viewpoint position 100 in the vertical direction, the overlapping distance range 400 can be made constant without being affected by the user viewpoint position 100 in the vertical direction. When the overlapping distance range 400 becomes constant, it is possible to cope with a deviation of an object in the landscape on which the virtual image 310 visually recognized by the user is overlapped.

The present invention is not limited to the exemplary embodiments described above, and a person skilled in the art may easily modify the exemplary embodiments described above to the scope of the claims.

### DESCRIPTION OF REFERENCE NUMERALS

- 1: vehicle
- 2: front window shield
- 10: vehicular display device
- 20: image display unit, liquid crystal panel module
- 21: display screen, liquid crystal panel
- 30: image generation unit
- 40: viewpoint position acquisition unit
- 41: vehicle interior image acquisition unit
- 42: vehicle interior image analysis unit
- 50: projection unit
- 80: image light
- 100: user viewpoint position
- 210: display area
- 220: use area
- 300: virtual image area
- 310: virtual image
- 400: overlapping distance range

## Claims

1. A vehicular display device comprising:
an image display unit comprising a display screen capable of displaying an image;
an image generation unit configured to generate the image displayed by the image display unit; and
a projection unit configured to project the image toward a light transmitting member of a vehicle in such a manner that the image is reflected by the light transmitting member of the vehicle and thus a user seated in a driver seat of the vehicle can view a virtual image,
wherein the image generation unit determines, in accordance with a position of a viewpoint of the user, a length in a direction corresponding to a horizontal direction of display content in a use area which is a part of the display screen of the image display unit and is used to display the image.

2. The vehicular display device according to claim 1, wherein the image generation unit determines an upper side length in the direction corresponding to the horizontal direction of the display content in the use area to be shorter than a lower side length as the position of the viewpoint of the user moves upward in a vertical direction, whereas the image generation unit determines the upper side length in the direction corresponding to the horizontal direction of the display content in the use area to be longer than the lower side length as the position of the viewpoint of the user moves downward in the vertical direction.

3. The vehicular display device according to claim 1 or 2, wherein the image generation unit determines the upper side length and the lower side length in the direction corresponding to the horizontal direction of the display content in the use area in such a manner that a shape of the virtual image of the display content recognized by the user is constant, without being affected by a change in the position of the viewpoint of the user.

4. The vehicular display device according to claim 3, wherein the image generation unit determines the use area in such a manner that the shape of the virtual image of the display content recognized by the user is a rectangle or a square, without being affected by a change in the position of the viewpoint of the user.
